# EUROPEAN PATENT SPECIFICATION

(11) **EP 4 250 453 B1**
(45) Date of publication and mention of the grant of the patent: **06.05.2026**
(21) Application number: 22858708.5
(22) Date of filing: 16.08.2022
(51) Int. Cl.: H01M 50/242, H01M 50/229, H01M 50/211, H01M 50/249, H01M 50/207, H01M 50/264

(54) **BATTERY PACK AND DEVICE INCLUDING THE SAME**
BATTERIEPACK UND VORRICHTUNG DIE DIESEN BEINHALTET
BLOC-BATTERIE ET DISPOSITIF LE COMPRENANT

(30) Priority: 17.08.2021 KR 20210107955
(43) Date of publication of application: 27.09.2023
(73) Proprietor: LG Energy Solution, Ltd., Seoul 07335 (KR)
(72) Inventor: LEE, Jung Hoon, Daejeon 34122 (KR); KIM, Dooseung, Daejeon 34122 (KR); YANG, Jaehun, Daejeon 34122 (KR); KIM, Seho, Daejeon 34122 (KR); PARK, Jeong Gi, Daejeon 34122 (KR)
(74) Representative: Goddar, Heinz J.
(86) International application number: PCT/KR2022/012193
(87) International publication number: WO 2023/022471

(56) References cited:
- WO-A1-2016/076308
- WO-A1-2021/024773
- CN-U- 205 609 622
- JP-A- 2011 049 181
- JP-A- 2011 049 181
- JP-A- 2012 119 232
- JP-A- 2020 155 285
- KR-A- 20190 000 211
- KR-B1- 101 699 867

## Description

### [TECHNICAL FIELD]

### Cross Citation with Related Application(s)

This application claims the benefit of Korean Patent Application No. 10-2021-0107955 filed on August 17, 2021 with the Korean Intellectual Property Office.

The present disclosure relates to a battery pack and a device including the same, and more particularly, to a battery pack that prevents excessive warpage of frame members and degradation of the life of a battery cell when a swelling phenomenon occurs at the battery cell, and a device including the same.

### [BACKGROUND]

Secondary batteries, which are easily applied to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate by-products from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is mounted in a metal can, and a pouch-type secondary battery in which the electrode assembly is mounted in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

An example secondary battery is known e.g. from WO 2021/024773 A1. This secondary battery comprises a battery module including a first sub-battery module and a pair of second sub-battery modules disposed on both sides of the first sub-battery module, a pack frame on which the battery module is mounted and a pair of connection portions, wherein the first sub-battery module is fixed to the bottom surface of the pack frame, and wherein the second sub-battery module moves along the longitudinal direction of the connection portion. Other example secondary batteries are known e.g. from JP 2011 049181 A, WO 2016/076308 A1, JP 2017 021960 A and CN 205 609 622 U.

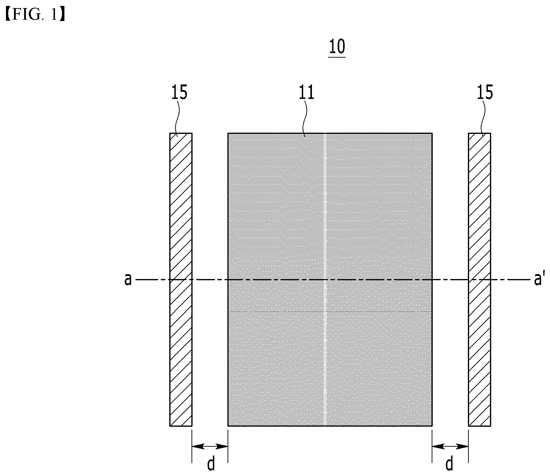

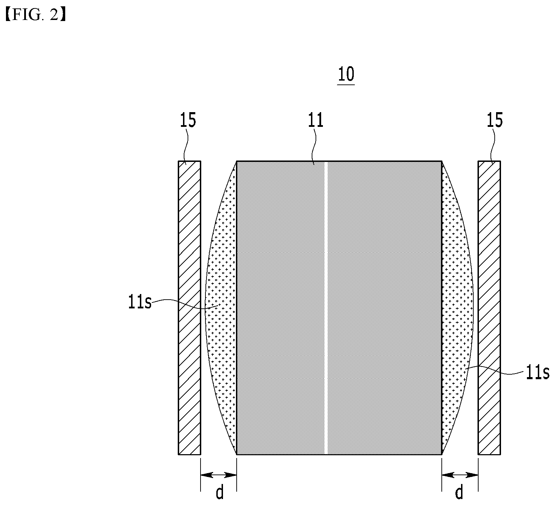

Fig. 1 is a top view of a conventional battery pack. Fig. 2 is a top view of the cell pack of Fig. 1 at end-of-life battery (EOL).

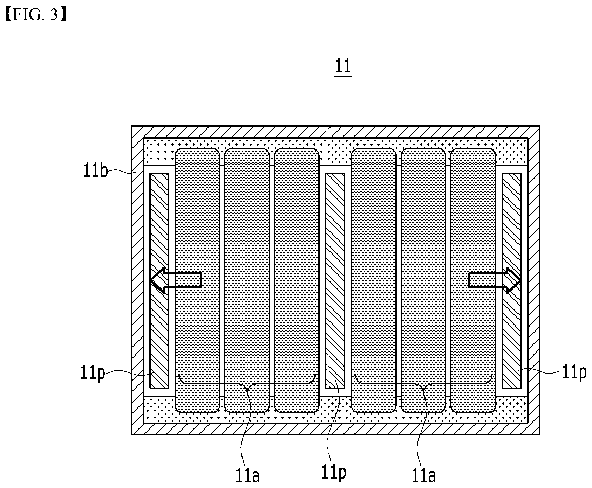

Referring to Fig. 1, a conventional battery pack 10 includes a structure in which a battery module 11 is mounted between pack frames 15. However, generally, the battery cells 11a (Fig. 3) included in the battery module 11 repeat the process of expanding and contracting during charging and discharging processes. In one example, as shown in Fig. 2, the battery module 11 at the end-of-life battery may have a swelling portion 11s that expands toward the pack frame 15. Such a swelling portion 11s weakens the stiffness of the battery module 11, and causes a problem of the degradation of life due to pressure deviation applied to the battery cells 11a included in the battery module 11 (Fig. 3).

Fig. 3 is a cross-sectional view of the battery module taken along the a-a' axis of Fig. 1.

Referring to Fig. 3, the conventional battery module 11 is configured such that the battery cells 11a may be either adhered or pressed and fixed to the module frame 11b. Here, a compression pad 11p may be disposed on one side surface of the battery cell stack in which the battery cells 11a are stacked.

In particular, as the amount of swelling of the battery cells 11a greatly increases in accordance with the recent trend of gradually increasing the capacity of the battery cells 11a, the amount of displacement to be absorbed by the module frame 11b also increases.

However, even in the case of the compression pad 11p, it is difficult to sufficiently absorb the deformation applied toward the module frame 11b in the process of expansion and contraction according to the charging and discharging of the battery cell 11a. In this respect, there is a problem in that the swelling portion 11s in which the frame 11b is deformed is easily formed as shown in Fig. 2.

Therefore, there is a need to develop a battery pack and battery module with new structures that prevents the formation of a swelling portion 11s in the process of expansion and contraction according to the charging and discharging of the battery cells, minimizes deformation of the module frame 11b, and prevents degradation of the life of the battery cells 11a, unlike the conventional battery pack 10 and battery module 11.

### [DETAILED DESCRIPTION OF THE INVENTION]

### [Technical Problem]

The present disclosure has been designed to solve the above-mentioned problems and an object of the present disclosure is to provide a battery pack that prevents excessive warpage of frame members and degradation of battery cell life when a swelling phenomenon occurs at the battery cell, and a device including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a battery module including a first sub-battery module and a pair of second sub-battery modules disposed on both sides of the first sub-battery module, respectively; a pack frame on which the battery module is mounted; and a pair of connection portions that penetrate through the upper and lower portions of the first sub-battery module and the pair of second sub-battery modules, respectively, wherein both sides of the pair of connection portions are fixed to the side surface portion of the pack frame, wherein the first sub-battery module is fixed to the bottom surface of the pack frame, and wherein the second sub-battery module moves along the longitudinal direction of the connection portion.

The battery pack further comprises a frame member that is mounted to the upper and lower portions of the first sub-battery module and the pair of second sub-battery modules, wherein the frame member may warp at least a part of outer side surfaces of the pair of second sub-cell modules.

Both side portions of the frame member move along the longitudinal direction of the connection portion together with the second sub-battery module, and a central portion of the frame member may be stretched along the longitudinal direction of the connection portion together with the second sub-battery module.

The frame member may be made of at least one material selected from the group consisting of glass fiber reinforced plastic (GFRP) and carbon fiber reinforced plastic (CFRP).

The frame member includes a first frame member and a second frame member, the first frame member may be mounted to the upper portion of the first sub-battery module and the pair of second sub-battery modules, and the second frame member may be mounted to the lower portions of the first sub-battery module and the pair of second sub-battery modules.

Both ends of the first frame member may extend along outer side surfaces of the pair of second sub-cell modules, both ends of the second frame member may extend along outer side surfaces of the pair of second sub-cell modules, and the end of the first frame member and the end of the second frame member may be spaced apart from each other.

The battery pack may further comprise an end plate disposed between the frame member and the side surface portion of the pack frame.

The end plate may make contact with an outer surface of the frame member disposed on the outer side surface of the pair of second sub-cell modules.

The pair of connection portions may penetrate through the upper and lower portions of the end plate, respectively.

Both sides of the pair of connection portions may be bolted to the side surface portion of the pack frame, and the first sub-cell module may be bolted to the bottom surface of the pack frame.

According to the invention, the first sub-battery module includes a a first battery cell stack in which a plurality of first battery cells are stacked, and the second sub-battery module includes a second battery cell stack in which a plurality of second battery cells are stacked.

The first sub-battery module includes a pair of first module frames respectively mounted to the upper and lower portions of the first battery cell stack, and the second sub-battery module includes a pair of second module frames respectively mounted to the upper and lower portions of the second battery cell stack.

The pair of connection portions each may penetrate through the pair of first module frames, and each penetrates through the pair of second module frames.

Both side surfaces of the first battery cell stack and both side surfaces of the second battery cell stack may be exposed toward the outside.

According to the invention, a first fixing member is formed between the first module frame and the first battery cell stack, and a second fixing member is formed between the second module frame and the second battery cell stack.

According to another embodiment of the present disclosure, there is provided a device comprising the above-mentioned battery pack.

### [Advantageous Effects]

According to embodiments, the present disclosure provides a battery pack and a device including the same in which the first sub-battery module is fixed to the bottom surface of the pack frame and the second sub-battery module moves along the longitudinal direction of the connection portion, thereby preventing excessive warpage of frame members and degradation of the life of a battery cell when a swelling phenomenon occurs at the battery cell.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a top view of a conventional battery pack;
Fig. 2 is a top view of the cell pack of Fig. 1 at end-of-life battery (EOL);
Fig. 3 is a cross-sectional view of the battery module taken along the a-a' axis of Fig. 1;
Fig. 4 is a top view which schematically shows a battery pack according to one embodiment of the present disclosure;
Fig. 5 is a cross-sectional view of the battery pack of Fig. 4 as viewed from the front;
Fig. 6 is a cross-sectional view showing a structure in which a first sub-battery module and a connection portion are coupled in the battery pack of Fig. 5;
Figs. 7 and 8 are cross-sectional views which shows a structure in which a second sub-cell module is coupled to a connection unit in the cross-section of Fig. 6; and
Figs. 9 and 10 are cross-sectional views which shows a structure in which frame members are coupled to the upper and lower portions of a first sub-battery module and a pair of second sub-battery modules in the cross-section of Fig. 7.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, a battery pack according to one embodiment of the present disclosure will be described. However, one cross-section of the battery pack is mainly described, but is not necessarily limited thereto and other cross-sections of the battery pack can also be described in the same or similar manner.

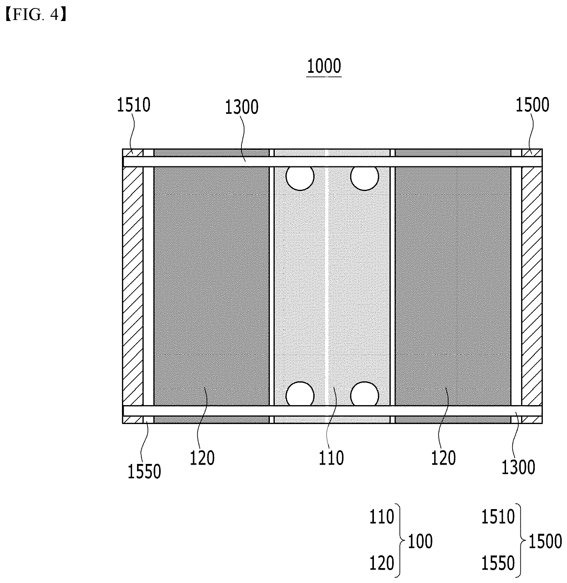

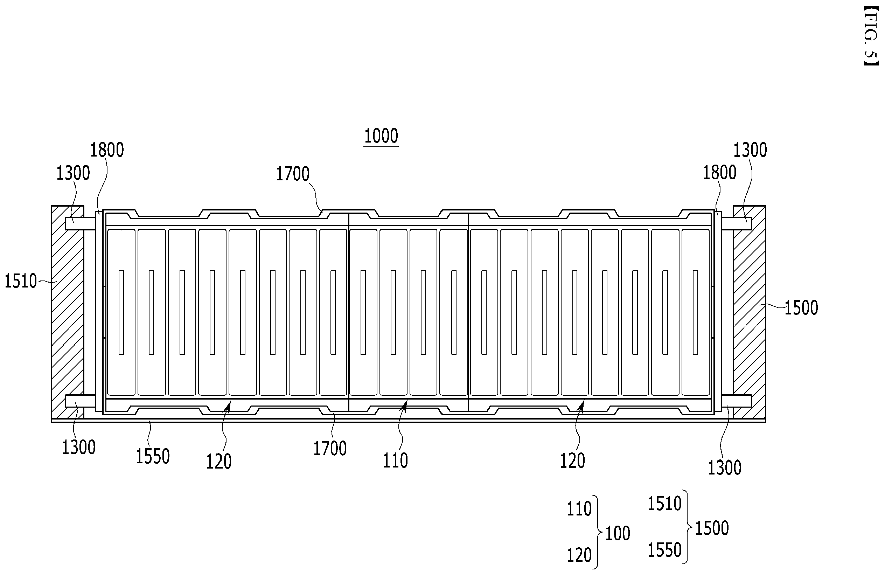

Fig. 4 is a top view which schematically shows a battery pack according to one embodiment of the present disclosure. Fig. 5 is a cross-sectional view of the battery pack of Fig. 4 as viewed from the front.

Referring to Figs. 4 and 5, a battery pack 1000 includes a battery module 100 including a first sub-battery module 110 and a pair of second sub-battery modules 120 disposed on both sides of the first sub-battery module 110, respectively; a pack frame 1500 on which the battery module 100 is mounted; and a pair of connection portions 1300 that penetrate through the upper and lower portions of the first sub-battery module 110 and the pair of second sub-battery modules 120, respectively.

More specifically, the pair of connection portions 1300 include a first connection portion and a second connection portion. Here, the first connection portion penetrates through the upper portions of the first sub-cell module 110 and the pair of second sub-cell modules 120, respectively, and the second connection portion penetrates through the lower portions of the first sub-cell module 110 and the pair of second sub-cell modules 120, respectively.

In addition, the pair of connection portions 1300 may penetrate through the upper and lower portions of the front and/or rear surfaces of the battery module 100, respectively. In one example, as shown in Fig. 4, the pair of connection portions 1300 may penetrate through the upper and lower portions of the front surface of the battery module 100, and may penetrate through the upper and lower portions of the rear surface of the battery module 100, respectively. In another example, the pair of connection portions 1300 may respectively penetrate through the upper and lower portions based on the center of the battery module 100. In another example, the pair of connection portions 1300 may respectively penetrate through the front, rear, and upper and lower portions of the battery module 100 based on the center thereof.

In one example, the pair of connecting parts 1300 may be rod-shaped members made of steel. However, the material and shape of the pair of connection portions 1300 are not limited thereto, and any member having a material and shape having stiffness capable of sufficiently supporting the upper and lower portions of the battery module 100 while penetrating through the upper and lower portions of the battery module 100 can be included in the present embodiment.

In addition, the pack frame 1500 includes a side surface portion 1510 and a bottom surface 1550. Here, the battery module 100 is disposed on the bottom surface 1550, but the battery module 100 may be mounted between a pair of side surface portions 1510. More specifically, the side surface portion 1510 may be integrated with the bottom surface 1550, or may be fixed to the bottom surface 1550 by a joining method such as a welding junction.

Here, both sides of the pair of connection portions 1300 may be fixed to the side surface portion 1510 of the pack frame 1500. More specifically, both sides of the first connection portion may be fixed to the upper side surface of the pack frame 1500, and both sides of the second connection portion may be fixed to the lower side surface of the pack frame 1500.

In one example, both sides of the pair of connection portions 1300 may be bolted to the side surface portion 1510 of the pack frame 1500. However, the coupling method of the pair of connection units 1300 is not limited thereto, and any method capable of stably fixing between both sides of the pair of connection portions 1300 and the side surface portion 1510 of the pack frame 1500 can be included in the present embodiment.

Here, the first sub-battery module 110 of the battery modules 100 may be fixed to the bottom surface 1550 of the pack frame 1500. In other words, the pair of second sub-cell modules 120 may not be fixed to the bottom surface 1550 of the pack frame 1500. That is, the pair of second sub-cell modules 120 may move along the longitudinal direction of the connection portion 1300. More specifically, the pair of second sub-cell modules 120 may move toward the side surface portion 1510 of the pack frame 1500.

In one example, the first sub-cell module 110 may be bolted to the bottom surface 1550 of the pack frame 1500. However, the coupling method between the first sub-cell module 110 and the bottom surface 1550 is not limited thereto, and any method capable of stably fixing between the first sub-cell module 110 and the bottom surface 1550 can be included in the present embodiment.

With the above structure, in the battery pack 1000 according to the present embodiment, when a swelling phenomenon occurs in some of the battery cells included in the battery module 100, the first sub-battery module 110 is fixed to the bottom surface 1550 of the pack frame 1500, wherein the pair of second sub-cell modules 120 can move along the longitudinal direction of the connection portion 1300 through the connection portion 1300, so that an increase in pressure generated inside the battery module 100 can be reduced.

That is, even if the volume of the battery cell is partially expanded when a swelling phenomenon occurs at the battery cell included in the battery module 100, the pair of second sub-cell modules 120 move toward the side surface portion 1510 of the pack frame 1500 through the connection portion 1300, so that an increase in pressure applied between battery cells due to the swelling phenomenon can be reduced.

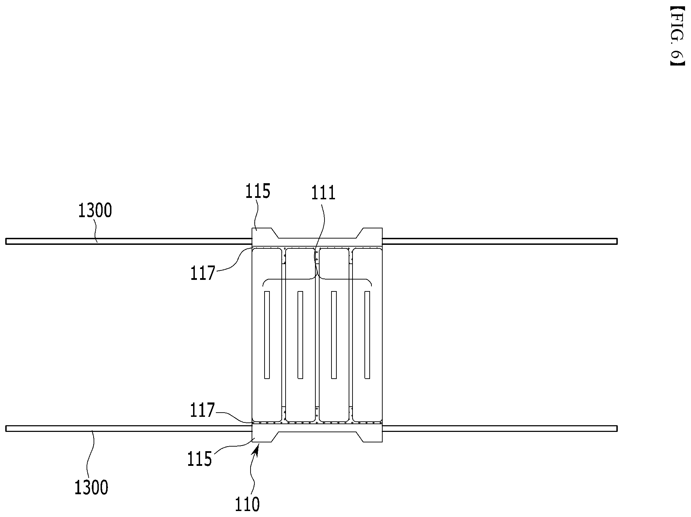

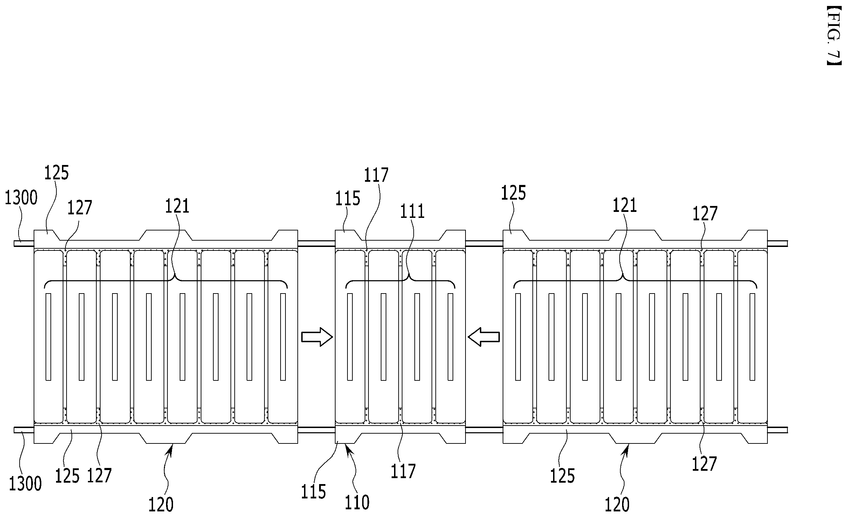

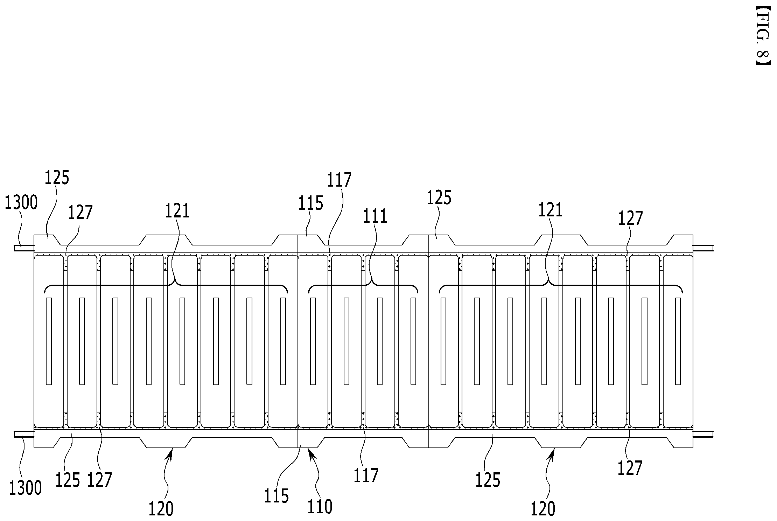

Fig. 6 is a cross-sectional view showing a structure in which a first sub-battery module and a connection portion are coupled in the battery pack of Fig. 5. Figs. 7 and 8 are cross-sectional views which shows a structure in which a second sub-cell module is coupled to a connection unit in the cross-section of Fig. 6.

Referring to Figs. 5 and 6, the first sub-battery module 110 includes a first battery cell stack 111 in which a plurality of first battery cells are stacked. Further, the first sub-battery module 110 includes a pair of first module frames 115 respectively mounted to the upper and lower portions of the first battery cell stack 111. Here, the pair of first module frames 115 may be integrated with each other, or spaced apart from each other. Further, as shown in Fig. 6, the pair of connection portions 1300 may penetrate through the upper and lower portions of the first sub-cell module 110, and particularly, pass through the pair of first module frames 115, respectively.

Referring to Figs. 5 and 7, the second sub-battery module 120 includes a second battery cell stack 121 in which a plurality of second battery cells are stacked. Further, the second sub-battery module 120 includes a pair of second module frames 125 respectively mounted to the upper and lower portions of the second battery cell stack 121. Here, the pair of second module frames 125 may be integrated with each other, or spaced apart from each other.

Further, as shown in Fig. 7, the pair of connection parts 1300 may penetrate through the upper and lower portions of the second sub-cell module 120, and particularly, penetrate through the pair of second module frames 125, respectively. The pair of second sub-cell modules 120 may be respectively inserted toward both side surfaces of the first sub-cell module 110 along the longitudinal direction of the connection part 1300.

Thereby, the battery pack 1000 according to the present embodiment is configured such that the battery module 100 can be stably fixed to the connection portion 1300 while preventing damage to the battery cells included in the battery module 100.

Further, referring to Figs. 6 to 8, a first fixing member 117 is formed between the first module frame 115 and the first battery cell stack 111, and a second fixing member 127 is formed between the second module frame 125 and the second battery cell stack 121. More specifically, the first fixing member 117 and the second fixing member 127 may be adhesive members. More preferably, the first fixing member 117 and the second fixing member 127 may be adhesive members having thermal conductivity.

Therefore, the battery pack 1000 according to the present embodiment is configured such that the first battery cell stack 111 and the second battery cell stack 121 can be, respectively, stably fixed to the first module frame 115 and the second module frame 125.

Further, in the first sub-battery module 110 and the second sub-battery module 120, both side surfaces of the first battery cell stack 111 and both side surfaces of the second battery cell stack 121 may be exposed toward the outside. In other words, both side surfaces of the first battery cell stack 111 may not be covered by the pair of first module frames 115, and both side surfaces of the second battery cell stack 121 may not be covered by the pair of second module frames 125. That is, as shown in Fig. 8, the first sub-battery module 110 and the second sub-battery module 120 may make contact with each other, and the side surface of the first battery cell stack 111 and the side surface of the second battery cell stack may make contact with each other.

Thereby, in the battery pack 1000 according to the present embodiment, the side surface of the first battery cell stack 111 and the side surface of the second battery cell stack make contact with each other, and thus, space efficiency and battery capacity can be increased.

Referring to Figs. 5 to 8, the first battery cell or the second battery cell included in the first battery cell stack 111 and the second battery cell stack 121 is preferably a pouch type battery cell. In one example, the first battery cell or the second battery cell may be manufactured by housing the electrode assembly in a pouch case of a laminated sheet including a resin layer and an inner layer, and then heat-sealing a sealing portion of the pouch case. The first battery cell or the second battery cell may be formed in a rectangular sheet-like structure. The first battery cell or the second battery cell may be configured by a plurality of numbers to form a first battery cell stack 111 or a second battery cell stack 121 that are electrically connected to each other.

Here, the number of the first battery cells and the second battery cells constituting the first battery cell stack 111 or the second battery cell stack 121 may be adjusted as needed. In one example, as shown in Figs. 5 to 8, the number of second battery cells included in the second battery cell stack 121 is larger than the number of first battery cells included in the first battery cell stack 111.

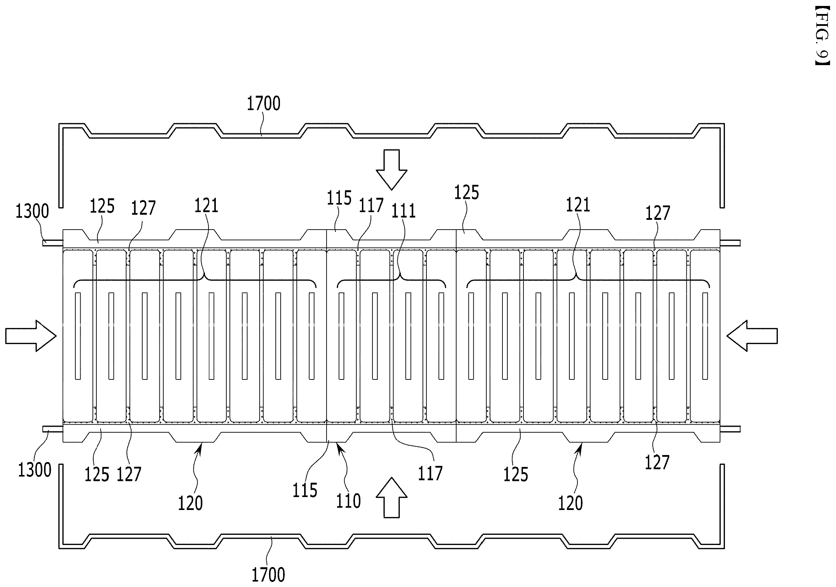

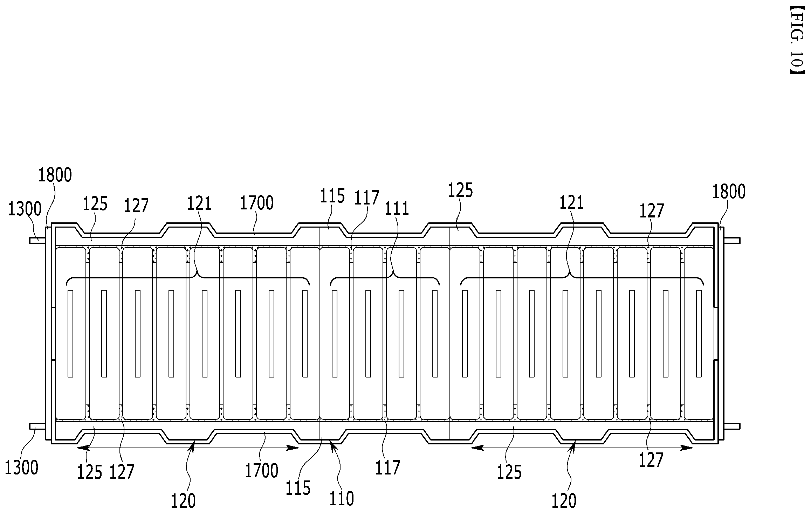

Figs. 9 and 10 are cross-sectional views which shows a structure in which frame members are coupled to the upper and lower portions of a first sub-battery module and a pair of second sub-battery modules in the cross-section of Fig. 7.

Referring to Figs. 5, 9 and 10, the battery pack 1000 according to the present embodiment may further include frame members 1700 mounted to the upper and lower portions of the first sub-battery module 110 and the pair of second sub-battery modules 120. More specifically, referring to Fig. 9, after pressing both sides of the first sub-cell module 110 and the pair of second sub-cell modules 120, a frame member 1700 may be mounted to the upper and lower portions of the first sub-battery module 110 and the pair of second sub-battery modules 120 as shown in Fig. 10.

Referring to Figs. 5 and 10, the frame member 1700 may cover at least a part of the outer side surfaces of the pair of second sub-cell modules 120. More specifically, the central portion of the frame member 1700 may extend along the upper and lower portions of the first sub-cell module 110 and the pair of second sub-cell modules 120. Further, the end of the frame member 1700 may cover at least a part of the outer side surfaces of the pair of second sub-cell modules 120. Here, the shape of the frame member 1700 may have the same shape as the upper and lower portions of the first sub-cell module 110 and the pair of second sub-cell modules.

Moreover, the frame member 1700 includes a first frame member and a second frame member, wherein the first frame member is mounted to the upper portion of the first sub-battery module 110 and the pair of second sub-battery modules 120, and the second frame member may be mounted to the lower portion of the first sub-battery module 110 and the pair of second sub-battery modules 120.

Here, both ends of the first frame member may extend along outer side surfaces of the pair of second sub-cell modules 120, both ends of the second frame member may extend along outer side surfaces of the pair of second sub-cell modules 120, and the end of the first frame member and the end of the second frame member may be spaced apart from each other. However, the structure is not limited thereto, and a structure in which an end of the first frame member and an end of the second frame member are connected to each other can also be included in the present embodiment.

Here, as shown in Fig. 10, both side portions of the frame member 1700 move along the longitudinal direction of the connection part 1300 together with the second sub-cell module 120, and the central portion of the frame member 1700 may extend along the length direction of the connection portion 1300 together with the second sub-battery module 120. In other words, as the second sub-battery module 120 moves along the longitudinal direction of the connecting portion 1300 in a state where both side portions of the frame member 1700 are fixed to the outer side surface of the second sub-battery module 120, the central portion of the frame member 1700 may also extend along the longitudinal direction of the connection portion 1300.

Here, the frame member 1700 may be made of a material with high elasticity and high stiffness. In one example, it may be made of one or more materials selected from the group consisting of glass fiber reinforced plastic (GFRP) and carbon fiber reinforced plastic (CFRP). In another example, the frame member 1700 may have a spring shape that can be easily stretched. However, the material and shape of the frame member 1700 are not limited thereto, and any material and shape that can be easily stretched according to the movement of the second sub-cell module 120 can be included in the present embodiment.

With the above structure, the battery pack 1000 according to the present embodiment is configured such that the frame member 1700 can be stretched along with the movement of the second sub-cell module 120 in a state where the first sub-cell module 110 and the pair of second sub-cell modules 120 are stably fixed within the frame member 1700, thereby preventing excessive warpage of frame members 1700 while sufficiently securing the stiffness of the battery module 100.

That is, even if the volume of the battery cell is partially expanded when a swelling phenomenon occurs at the battery cell included in the battery module 100, the frame member 1700 extends toward the side portion 1510 of the pack frame 1500 together with the second sub-battery module 120, so that the amount of displacement and the cell reaction force that can be absorbed by the frame member 1700 can absorb can increase, and pressure deviations applied between battery cells due to swelling phenomenon can also be reduced, thereby preventing degradation of the life of battery cells.

Further, referring to Figs. 5 and 10, the battery pack 1000 according to the present embodiment may further include an end plate 1800 disposed between the frame member 1700 and the side surface portion 1510 of the pack frame 1500.

More specifically, the end plate 1800 may make contact with the outer surface of the frame member 1700 disposed on the outer side surface of the pair of second sub-cell modules 120. That is, in a state in which the first sub-battery module 110 and the pair of second sub-battery modules 120 are mounted in the frame member 1700, the end plate 1800 may make contact with the outer surface of the frame member 1700 disposed on the outer side surface of the pair of second sub-cell modules 120.

Here, the pair of connection portions 1300 may penetrate through the upper and lower portions of the end plate 1800, respectively. Further, the end plate 1800 may be weld-joined to the outer surface of the frame member 1700 disposed on the outer side surface of the pair of second sub-cell modules 120 or may be joined by a separate adhesive layer.

With the above structure, the battery pack 1000 according to the present embodiment is configured such that the end plate 1800 is joined to the outer surface of the frame member 1700 disposed on the outer side surface of the pair of second sub-cell modules 120, so that the first sub-cell module 110 and the pair of second sub-cell modules 120 can be more stably fixed within the frame member 1700.

In addition, even when the frame member 1700 is stretched along with the movement of the second sub-cell module 120, it is possible to prevent the end plate 1800 from being separated from the outer side surface of the frame member 1700 and the second sub-cell module 120. That is, the amount of displacement and cell reaction force that can be absorbed by the frame member 1700 can be increased, and pressure deviations applied between battery cells due to swelling phenomenon can also be further reduced, and thus life degradation of battery cells may be more prevented.

The battery pack described above can be applied to a device according to another embodiment of the present disclosure. Such a device can be applied to a vehicle means such as an electric bicycle, an electric vehicle, or a hybrid vehicle, but the present disclosure is not limited thereto, and is applicable to various devices that can use a battery module and a battery pack including the same, which also falls within the scope of the present disclosure.

### [Description of Reference Numerals]

100: battery module
110: first sub-battery module
120: second sub-battery module
1000: battery pack
1300: connection portion
1500: pack frame
1700: frame member
1800: end plate

## Claims

1. A battery pack (1000) comprising:
a battery module (100) including a first sub-battery module (110) and a pair of second sub-battery modules (120) disposed on both sides of the first sub-battery module (110), respectively;
a pack frame (1500) on which the battery module (100) is mounted; and
a pair of connection portions (1300) that penetrate through the upper and lower portions of the first sub-battery module (110) and the pair of second sub-battery modules (120), respectively,
wherein both sides of the pair of connection portions (1300) are fixed to the side surface portion (1510) of the pack frame (1500),
wherein the first sub-battery module (110) includes a first battery cell stack (111) in which a plurality of first battery cells are stacked, and the first sub-battery module (110) further includes a pair of first module frames (115) respectively mounted to the upper and lower portions of the first battery cell stack (111), and wherein a first fixing member (117) is formed between the first module frame (115) and the first battery cell stack (111), and the first sub-battery module (110) is fixed to the bottom surface (1550) of the pack frame (1500), and
wherein the second sub-battery module (120) includes a second battery cell stack (121) in which a plurality of second battery cells are stacked, and the second sub-battery module (120) further includes a pair of second module frames (125) respectively mounted to the upper and lower portions of the second battery cell stack (121), and wherein a second fixing member (127) is formed between the second module frame (125) and the second battery cell stack (121), and the second sub-battery module (120) moves along the longitudinal direction of the connection portion (1300)

2. The battery pack according to claim 1, further comprising:
a frame member (1700) that is mounted to the upper and lower portions of the first sub-battery module (110) and the pair of second sub-battery modules (120),
wherein the frame member (1700) wraps at least a part of outer side surfaces of the pair of second sub-battery modules (120).

3. The battery pack (1000) according to claim 2, wherein the frame member (1700) covers at least a part of the outer side surfaces of the sub-battery module (120), and wherein the shape of the frame member (1700) has the same shape as the upper and lower portions of the first sub-battery module (110) and the second sub-battery module (120).

4. The battery pack (1000) according to claim 2, wherein:
both side portions of the frame member (1700) move along the longitudinal direction of the connection portion (1300) together with the second sub-battery module (120), and
a central portion of the frame member (1700) is stretched along the longitudinal direction of the connection portion (1300) together with the second sub-battery module (120).

5. The battery pack (1000) according to claim 4, wherein:
the frame member (1700) is made of at least one material selected from the group consisting of glass fiber reinforced plastic and carbon fiber reinforced plastic.

6. The battery pack (1000) according to claim 2, wherein:
the frame member (1700) includes a first frame member and a second frame member,
the first frame member is mounted to the upper portion of the first sub-battery module (110) and the pair of second sub-battery modules (120), and
the second frame member is mounted to the lower portions of the first sub-battery module (110) and the pair of second sub-battery modules (120).

7. The battery pack (1000) according to claim 6, wherein:
both ends of the first frame member extend along outer side surfaces of the pair of second sub-battery modules (120),
both ends of the second frame member extend along outer side surfaces of the pair of second sub-battery modules (120), and
the end of the first frame member and the end of the second frame member are spaced apart from each other.

8. The battery pack (1000) according to claim 2, further comprising:
an end plate (1800) disposed between the frame member and the side surface portion of the pack frame (1500).

9. The battery pack (1000) according to claim 8, wherein:
the end plate (1800) makes contact with an outer surface of the frame member disposed on the outer side surface of the pair of second sub-battery modules (120).

10. The battery pack (1000) according to claim 9, wherein:
the pair of connection portions (1300) penetrate through the upper and lower portions of the end plate (1800), respectively.

11. The battery pack (1000) according to claim 1, wherein:
both sides of the pair of connection portions (1300) are bolted to the side surface portion of the pack frame (1500), and
the first sub-battery module (110) is bolted to the bottom surface (1550) of the pack frame (1500).

12. The battery pack (1000) according to claim 1, wherein:
the pair of connection portions (1300) each penetrates through the pair of first module frames (115), and each penetrates through the pair of second module frames (125).

13. The battery pack (1000) according to claim 1, wherein:
both side surfaces of the first battery cell stack (111) and both side surfaces of the second battery cell stack (121) are exposed toward the outside.

14. The battery pack (1000) according to claim 1, wherein the first fixing member (117) and the second fixing member (127) are respective adhesive members, in particular adhesive members having thermal conductivity.

## Patentansprüche

1. Batteriepack (1000), umfassend:
ein Batteriemodul (100) mit einem ersten Teilbatteriemodul (110) und einem Paar zweiter Teilbatteriemodule (120), die auf beiden Seiten des ersten Teilbatteriemoduls (110) angeordnet sind;
einen Packrahmen (1500), auf dem das Batteriemodul (100) montiert ist; und
ein Paar Verbindungsabschnitte (1300), die durch die oberen beziehungsweise unteren Abschnitte des ersten Teilbatteriemoduls (110) und das Paar zweiter Teilbatteriemodule (120) hindurchragen,
wobei beide Seiten des Paares von Verbindungsabschnitten (1300) an dem Seitenflächenabschnitt (1510) des Packrahmens (1500) befestigt sind,
wobei das erste Teilbatteriemodul (110) einen ersten Batteriezellenstapel (111) umfasst, in dem mehrere erste Batteriezellen gestapelt sind, und wobei das erste Teilbatteriemodul (110) ferner ein Paar erster Modulrahmen (115) umfasst, die jeweils am oberen und unteren Abschnitt des ersten Batteriezellenstapels (111) angebracht sind, und wobei ein erstes Befestigungselement (117) zwischen dem ersten Modulrahmen (115) und dem ersten Batteriezellenstapel (111) ausgebildet ist, und wobei das erste Teilbatteriemodul (110) an der Unterseite (1550) des Packrahmens (1500) befestigt ist, und
wobei das zweite Teilbatteriemodul (120) einen zweiten Batteriezellenstapel (121) umfasst, in dem mehrere zweite Batteriezellen gestapelt sind, und das zweite Teilbatteriemodul (120) ferner ein Paar zweiter Modulrahmen (125) umfasst, die jeweils am oberen und unteren Abschnitt des zweiten Batteriezellenstapels (121) angebracht sind, und wobei ein zweites Befestigungselement (127) zwischen dem zweiten Modulrahmen (125) und dem zweiten Batteriezellenstapel (121) ausgebildet ist, und wobei sich das zweite Teilbatteriemodul (120) entlang der Längsrichtung des Verbindungsabschnitts (1300) bewegt.

2. Batteriepack gemäß Anspruch 1, ferner umfassend:
ein Rahmenelement (1700), das an den oberen und unteren Abschnitten des ersten Teilbatteriemoduls (110) und des Paares zweiter Teilbatteriemodule (120) angebracht ist,
wobei das Rahmenelement (1700) zumindest einen Teil der äußeren Seitenflächen des Paares von zweiten Teilbatteriemodulen (120) umschließt.

3. Batteriepack (1000) nach Anspruch 2, wobei das Rahmenelement (1700) zumindest einen Teil der äußeren Seitenflächen des Teilbatteriemoduls (120) abdeckt, und wobei die Form des Rahmenelements (1700) dieselbe Form wie die oberen und unteren Abschnitte des ersten Teilbatteriemoduls (110) und des zweiten Teilbatteriemoduls (120) aufweist.

4. Batteriepack (1000) nach Anspruch 2, wobei:
sich beide Seitenabschnitte des Rahmenelements (1700) zusammen mit dem zweiten Teilbatteriemodul (120) entlang der Längsrichtung des Verbindungsabschnitts (1300) bewegen, und
ein mittlerer Abschnitt des Rahmenelements (1700) sich zusammen mit dem zweiten Teilbatteriemodul (120) entlang der Längsrichtung des Verbindungsabschnitts (1300) ausdehnt.

5. Batteriepack (1000) nach Anspruch 4, wobei:
das Rahmenelement (1700) aus zumindest einem Material gebildet ist, das ausgewählt ist aus der Gruppe bestehend aus glasfaserverstärktem Kunststoff und kohlefaserverstärktem Kunststoff.

6. Batteriepack (1000) nach Anspruch 2, wobei:
das Rahmenelement (1700) ein erstes Rahmenelement und ein zweites Rahmenelement umfasst,
das erste Rahmenelement am oberen Abschnitt des ersten Teilbatteriemoduls (110) und des Paares von zweiten Teilbatteriemodulen (120) angebracht ist, und
das zweite Rahmenelement an den unteren Abschnitten des ersten Teilbatteriemoduls (110) und des Paares zweiter Teilbatteriemodule (120) angebracht ist.

7. Batteriepack (1000) nach Anspruch 6, wobei:
sich beide Enden des ersten Rahmenelements entlang der Außenseiten des Paares zweiter Teilbatteriemodule (120) erstrecken,
sich beide Enden des zweiten Rahmenelements entlang der Außenseiten des Paares zweiter Teilbatteriemodule (120) erstrecken, und
das Ende des ersten Rahmenelements und das Ende des zweiten Rahmenelements voneinander beabstandet sind.

8. Batteriepack (1000) nach Anspruch 2, ferner umfassend:
eine Endplatte (1800), die zwischen dem Rahmenelement und dem Seitenflächenabschnitt des Packrahmens (1500) angeordnet ist.

9. Batteriepack (1000) nach Anspruch 8, wobei:
die Endplatte (1800) mit einer Außenseite des Rahmenelements in Kontakt steht, das an der äußeren Seitenfläche des Paares von zweiten Teilbatteriemodulen (120) angeordnet ist.

10. Batteriepack (1000) nach Anspruch 9, wobei:
das Paar von Verbindungsabschnitten (1300) jeweils durch den oberen und den unteren Abschnitt der Endplatte (1800) hindurchragt.

11. Batteriepack (1000) nach Anspruch 1, wobei:
beide Seiten des Paares von Verbindungsabschnitten (1300) an den Seitenflächenabschnitt des Packrahmens (1500) angeschraubt sind, und
wobei das erste Teilbatteriemodul (110) an der Unterseite (1550) des Packrahmens (1500) verschraubt ist.

12. Batteriepack (1000) nach Anspruch 1, wobei:
das Paar von Verbindungsabschnitten (1300) jeweils durch das Paar von ersten Modulrahmen (115) hindurchragt und jeweils durch das Paar von zweiten Modulrahmen (125) hindurchragt.

13. Batteriepack (1000) nach Anspruch 1, wobei:
sowohl die Seitenflächen des ersten Batteriezellenstapels (111) als auch die Seitenflächen des zweiten Batteriezellenstapels (121) nach außen freiliegen.

14. Batteriepack (1000) nach Anspruch 1, wobei das erste Befestigungselement (117) und das zweite Befestigungselement (127) jeweils Klebeelemente sind, insbesondere Klebeelemente mit Wärmeleitfähigkeit.

## Revendications

1. Bloc-batterie (1000), comprenant :
un module batterie (100) comprenant un premier sous-module de batterie (110) et une paire de deuxièmes sous-modules de batterie (120) disposés des deux côtés du premier sous-module de batterie (110), respectivement ;
un cadre de bloc (1500) sur lequel est monté le module de batterie (100) ; et
une paire de parties de connexion (1300) pénétrant respectivement dans les parties supérieure et inférieure du premier sous-module de batterie (110) et la paire de deuxièmes sous-modules de batterie (120) respectivement,
deux côtés de la paire de parties de connexion (1300) étant fixés sur la partie de surface latérale (1510) du cadre de bloc (1500),
le premier sous-module de batterie (110) comprenant un premier empilement de cellules de batterie (111) dans lequel une pluralité de premières cellules de batterie sont empilées, et le premier sous-module de batterie (110) comprenant en outre une paire de premiers cadres de module (115) montés respectivement sur les parties supérieure et inférieure du premier empilement de cellules de batterie (111), et un premier élément de fixation (117) étant formé entre le premier cadre de module (115) et le premier empilement de cellules de batterie (111), et le premier sous-module de batterie (110) étant fixé sur la surface inférieure (1550) du cadre de bloc (1500), et
le deuxième sous-module de batterie (120) comprenant un deuxième empilement de cellules de batterie (121) dans lequel une pluralité de deuxièmes cellules de batterie sont empilées, et le deuxième sous-module de batterie (120) comprenant en outre une paire de deuxièmes cadres de module (125) montés respectivement sur les parties supérieure et inférieure du deuxième empilement de cellules de batterie (121), et un deuxième élément de fixation (127) étant formé entre le deuxième cadre de module (125) et le deuxième empilement de cellules de batterie (121), et le deuxième sous-module de batterie (120) se déplaçant dans le sens longitudinal de la partie de connexion (1300).

2. Bloc-batterie (1) selon la revendication 1, comprenant en outre:
un élément de cadre (1700) monté sur les parties supérieure et inférieure du premier sous-module de batterie (110) et la paire de deuxièmes sous-modules de batterie (120),
l'élément de cadre (1700) enveloppant au moins une partie de surfaces latérales extérieures de la paire de deuxièmes sous-modules de batterie (120).

3. Bloc-batterie (1000) selon la revendication 2, l'élément de cadre (1700) couvrant au moins une partie des surfaces latérales extérieures du sous-module de batterie (120), et la forme de l'élément de cadre (1700) étant la même que celle des parties supérieure et inférieure du premier sous-module de batterie (110) et du deuxième sous-module de batterie (120).

4. Bloc-batterie (1000) selon la revendication 2,
les deux parties latérales de l'élément de cadre (1700) se déplaçant dans le sens longitudinal de la partie de connexion (1300) conjointement avec le deuxième sous-module de batterie (120), et
une partie centrale de l'élément de cadre (1700) étant étirée dans le sens longitudinal de la partie de connexion (1300) conjointement avec le deuxième sous-module de batterie (120).

5. Bloc-batterie (1000) selon la revendication 4,
l'élément de cadre (1700) étant réalisé avec au moins un matériau sélectionné dans le groupe composé de plastique renforcé de fibres de verre et de plastique renforcé de fibres de carbone.

6. Bloc-batterie (1000) selon la revendication 2,
l'élément de cadre (1700) comprenant un premier élément de cadre et un deuxième élément de cadre,
le premier élément de cadre étant monté sur la partie supérieure du premier sous-module de batterie (110) et la paire de deuxièmes sous-modules de batterie (120), et
le deuxième élément de cadre étant monté sur les parties inférieures du premier sous-module de batterie (110) et la paire de deuxièmes sous-modules de batterie (120).

7. Bloc-batterie (1000) selon la revendication 6,
les deux bouts du premier élément de cadre s'étendant le long de surfaces latérales extérieures de la paire de deuxièmes sous-modules de batterie (120),
les deux bouts du deuxième élément de cadre s'étendant le long de surfaces latérales extérieures de la paire de deuxièmes sous-modules de batterie (120), et
le bout du premier élément de cadre et le bout du deuxième élément de cadre étant espacés l'un de l'autre.

8. Bloc-batterie (1000) selon la revendication 2, comprenant en outre:
une plaque d'extrémité (1800) disposée entre l'élément du cadre et la partie de la surface latérale du cadre de bloc (1500).

9. Bloc-batterie (1000) selon la revendication 8,
la plaque d'extrémité (1800) se plaçant au contact d'une surface extérieure de l'élément de cadre disposé sur la surface latérale extérieure de la paire de deuxièmes sous-modules de batterie (120).

10. Bloc-batterie (1000) selon la revendication 9,
la paire de parties de connexion (1300) pénétrant respectivement dans les parties supérieure et inférieure de la plaque d'extrémité (1800).

11. Bloc-batterie (1000) selon la revendication 1,
deux côtés de la paire de parties de connexion (1300) étant boulonnés à la partie de surface latérale du cadre de bloc (1500), et
le premier module sous-batterie (110) étant boulonné à la surface inférieure (1550) du cadre du pack (1500).

12. Bloc-batterie (1000) selon la revendication 1,
la paire de parties de connexion (1300) traversant chacune la paire de premiers cadres de module (115), et chacune traversant la paire de deuxièmes cadres de module (125).

13. Bloc-batterie (1000) selon la revendication 1,
les deux surfaces latérales du premier empilement de cellules de batterie (111) et les deux surfaces latérales du deuxième empilement de cellules de batterie (121) étant exposées vers l'extérieur.

14. Bloc-batterie (1000) selon la revendication 1, le premier élément de fixation (117) et le deuxième élément de fixation (127) étant respectivement des éléments adhésifs, notamment des éléments adhésifs ayant une conductivité thermique.
